# FASCICULE DE BREVET EUROPEEN

(11) **EP 3 964 915 B1**
(45) Date de publication et mention de la délivrance du brevet: **19.10.2022**
(21) Numéro de dépôt: 21170849.0
(22) Date de dépôt: 28.04.2021
(51) Int. Cl.: G05D 1/10

(54) **PROCÉDÉ DE DÉTERMINATION DU POSITIONNEMENT D'UN AÉRONEF SUIVEUR PAR RAPPORT À UN AÉRONEF MENEUR VOLANT DEVANT L AÉRONEF SUIVEUR**
VERFAHREN ZUR BESTIMMUNG DER POSITION EINES FOLGEFLUGZEUGS IN BEZUG AUF EIN VOR IHM FLIEGENDES LEITFLUGZEUG
METHOD FOR DETERMINING THE POSITION OF A FOLLOWING AIRCRAFT RELATIVE TO A LEADING AIRCRAFT FLYING IN FRONT OF THE FOLLOWING AIRCRAFT

(30) Priorité: 26.05.2020 FR 2005541
(43) Date de publication de la demande: 09.03.2022
(73) Titulaire: AIRBUS OPERATIONS (S.A.S.), 31060 Toulouse (FR); Airbus (S.A.S.), 31700 Blagnac (FR)
(72) Inventeur: LEFORT, Maxime, 31060 TOULOUSE (FR); FOUCAULT, Philippe, 31700 BLAGNAC (FR); DEMOULIN, Quentin, 31060 TOULOUSE (FR)
(74) Mandataire: Sarraméa, Claude

(56) Documents cités:
- EP-A1- 2 338 793
- EP-A2- 2 442 201
- US-B1- 6 889 941

## Description

### DOMAINE TECHNIQUE

La présente invention concerne un procédé de détermination du positionnement d'un aéronef suiveur par rapport à un aéronef meneur, ledit aéronef suiveur volant dans le sillage dudit aéronef meneur, dans le but de réaliser un vol en formation.

### ÉTAT DE LA TECHNIQUE

Dans le domaine de l'aéronautique, on entend par « vol en formation », le vol d'une formation d'au moins deux aéronefs comportant un aéronef suivi, dit aéronef meneur, et au moins un aéronef suiveur. Dans une telle formation, l'aéronef suiveur est, de préférence, asservi de manière à reprendre les consignes de vol de l'aéronef meneur, en particulier via un pilotage autonome.

Les vols en formation, en particulier d'avions commerciaux, présentent l'avantage de réduire instantanément la consommation de carburant de l'aéronef suiveur en réduisant la traînée de ce dernier. Cependant, la zone dans l'espace relativement au positionnement de l'aéronef meneur, qui présente un tel intérêt pour l'aéronef suiveur, est restreinte. Il est donc nécessaire que le positionnement de l'aéronef suiveur soit suffisamment précis et rapide par rapport à la position de l'aéronef meneur pour que la réduction de consommation de carburant soit significative et donc pour que le vol en formation soit efficace.

On connaît différentes méthodes pour mesurer les positions relatives de deux aéronefs en vol, notamment par transmission mutuelle de données de géolocalisation, en particulier des données issues d'un système de positionnement par satellites de type GPS (pour « Global Positioning System » en anglais). Ces méthodes usuelles nécessitent notamment des moyens de transmission appropriés entre les aéronefs et ne sont pas forcément toujours très précises.

Document EP 2 338 793 A1 montre un procédé de détermination du positionnement d'un aéronef suiveur par rapport à un aéronef meneur volant devant l'aéronef suiveur. Le document montre également qu'une image prise par une caméra de l'aéronef suiveur est comparée à un contour théorique de l'aéronef meneur stocké dans une base de données.

Les méthodes usuelles pour mesurer les positions relatives de deux aéronefs en vol, en particulier pour faire bénéficier à l'aéronef suiveur un positionnement optimal, ne sont donc pas complètement satisfaisantes.

### EXPOSÉ DE L'INVENTION

La présente invention a pour objet de remédier à cet inconvénient. Elle concerne un procédé de détermination du positionnement d'un aéronef suiveur par rapport à un aéronef meneur, ledit aéronef meneur volant devant ledit aéronef suiveur. En particulier, l'aéronef suiveur vole dans le sillage de l'aéronef meneur, dans le but de réaliser un vol en formation avec l'aéronef meneur.

Selon l'invention, le procédé est mis en œuvre par l'aéronef suiveur, et comprend les étapes suivantes mises en œuvre de façon itérative :
- une étape d'acquisition d'une image, dans laquelle l'aéronef meneur est visible ;
- une étape de vérification de la présence ou de l'absence d'une itération précédente, et de la valeur d'un paramètre, dit score, assorti à chaque itération précédente ;
- si une absence d'itération précédente ou une itération précédente assortie d'un score supérieur à un seuil prédéterminé est détectée, une étape d'initialisation comprenant :
   - une sous-étape de détection de l'aéronef meneur sur l'image,
   - une sous-étape d'extraction du contour dudit aéronef détecté, et
   - une sous-étape de détermination d'un profil de l'aéronef meneur à partir d'un modèle en trois dimensions de l'aéronef meneur enregistré dans une base de données et d'une position initiale de l'aéronef suiveur par rapport à l'aéronef meneur ;
- si une itération précédente assortie d'un score inférieur à un seuil prédéterminé est détectée, une étape de continuation, successive à une étape d'initialisation d'une itération précédente, et comprenant une sous-étape d'extraction du contour de l'aéronef meneur ;
- dans tous les cas, une étape d'ajustement consistant à mettre en œuvre un algorithme de recalage des contours, pour déterminer un profil optimisé à partir d'une comparaison du contour de l'aéronef meneur avec son profil et à calculer une valeur du score de l'itération à partir de l'écart entre lesdits contour et profil comparés ;
- si la valeur du score est inférieure au seuil prédéterminé, une étape de détermination du positionnement de l'aéronef suiveur par rapport à l'aéronef meneur, à partir du profil optimisé et du modèle en trois dimensions de l'aéronef meneur.

Ainsi, grâce au procédé tel que décrit ci-dessus, on dispose d'un positionnement (selon six degrés de liberté) rapide et précis de l'aéronef suiveur par rapport à l'aéronef meneur. Ce positionnement est utilisé pour mettre en œuvre un vol en formation, en particulier en permettant de définir des consignes de vol pour le pilotage (autonome) de l'aéronef suiveur.

L'étape d'ajustement peut comporter :
- en l'absence d'une itération précédente, les sous-étapes de comparaison des pixels du profil (déterminé au cours de la sous-étape de détermination de l'étape d'initialisation) avec les pixels du contour de l'aéronef meneur et d'identification des points de contrôle du contour de l'aéronef meneur qui correspondent, respectivement, à des points de contrôle du profil de manière à obtenir des paires de points de contrôle ;
- en présence d'une itération précédente, les sous-étapes de détermination d'un nouveau profil de l'aéronef meneur à partir du modèle en trois dimensions de l'aéronef meneur et en fonction des données de l'itération précédente, de comparaison des pixels du nouveau profil avec les pixels du contour de l'aéronef meneur et d'identification des points de contrôle du contour de l'aéronef meneur qui correspondent respectivement à des points de contrôle du nouveau profil, de manière à obtenir des paires de points de contrôle ;
- dans tous les cas, une sous-étape de calcul d'une distance entre les points de contrôle de chaque paire de points de contrôle et de la valeur du score de l'itération correspondant à la somme des distances déterminées pour l'ensemble des paires.

La sous-étape d'identification des points de contrôle du contour de l'aéronef meneur peut se baser sur des mesures de gradients locaux.

Le procédé peut comprendre une étape de transmission du positionnement déterminé de l'aéronef suiveur par rapport à l'aéronef meneur (lors de l'étape de détermination) à au moins un dispositif utilisateur.

Selon un mode de réalisation, le modèle en trois dimensions de l'aéronef meneur est déterminé préalablement au vol de l'aéronef suiveur, par exemple à partir du numéro de vol ou de l'immatriculation de l'aéronef meneur.

Selon un mode de réalisation, le modèle en trois dimensions de l'aéronef meneur est déterminé au cours de la sous-étape de détection (de l'étape d'initialisation), à partir d'une analyse des caractéristiques aérodynamiques de l'aéronef meneur, telles que la forme, l'envergure des ailes ou le nombre de réacteurs de l'aéronef meneur.

De façon avantageuse, le modèle en trois dimensions de l'aéronef meneur peut prendre en compte des déformations dudit aéronef meneur en vol.

De plus, avantageusement, la sous-étape de détection peut correspondre à la mise en œuvre d'une méthode de détection basée sur des méthodes d'apprentissage profond, mettant en œuvre des réseaux de neurones convolutifs. En particulier, cette méthode de détection permet de déterminer, sur l'image, au moins les coordonnées d'un cadre contenant complètement l'aéronef meneur. Un avantage de l'utilisation d'un réseau de neurones est que la détection est rapide et à complexité constante.

Dans un mode de réalisation particulier, l'étape d'acquisition d'une image consiste à prendre une image monochrome ou en couleurs de l'aéronef meneur depuis l'aéronef suiveur. Ainsi, la méthode de détection est apte à analyser au moins l'un des types d'images suivantes : des images monochromes, ou des images en couleurs.

### BRÈVE DESCRIPTION DES FIGURES

Les figures annexées feront bien comprendre comment l'invention peut être réalisée. Sur ces figures, des références identiques désignent des éléments semblables.
La figure 1 est un schéma synoptique d'un mode de réalisation d'un système de détermination du positionnement d'un aéronef suiveur par rapport à un aéronef meneur, ledit aéronef suiveur volant dans le sillage dudit aéronef meneur.
La figure 2 est un schéma synoptique d'un mode de réalisation d'une unité de traitement d'image du système de détermination du positionnement de la figure 1.
La figure 3 illustre schématiquement les étapes principales d'un mode de réalisation préféré d'un procédé de détermination du positionnement d'un aéronef suiveur par rapport à un aéronef meneur, ledit aéronef suiveur volant dans le sillage dudit aéronef meneur.
La figure 4 est une vue en perspective d'un aéronef pourvu d'un repère.
La figure 5 est une vue schématique de dessus d'un exemple d'une formation en vol comprenant un aéronef meneur et un aéronef suiveur.
La figure 6 est une vue partielle en perspective, vue de l'intérieur d'un aéronef suiveur, en particulier d'une installation d'une caméra vidéo sur le tableau de bord du cockpit dudit aéronef suiveur, faisant partie d'un système de détermination du positionnement.
La figure 7 est une vue schématique d'une image montrant un aéronef meneur et pourvue d'un cadre comprenant entièrement ledit aéronef meneur, cette vue permettant d'illustrer une méthode de détection de l'aéronef meneur dans l'image.
La figure 8A est une vue schématique d'une image recadrée montrant un aéronef meneur.
La figure 8B est une vue schématique montrant le contour associé audit aéronef meneur, les figures 8A et 8B permettant d'illustrer une méthode d'extraction de contour d'un aéronef meneur dans une image.
La figure 9A est une vue schématique montrant la superposition d'un contour d'un aéronef meneur et d'un profil.
La figure 9B est une vue schématique montrant la superposition du contour de l'aéronef meneur et d'un profil optimisé, les figures 9A et 9B permettant d'illustrer une méthode de recalage du profil de l'aéronef meneur.

### DESCRIPTION DÉTAILLÉE

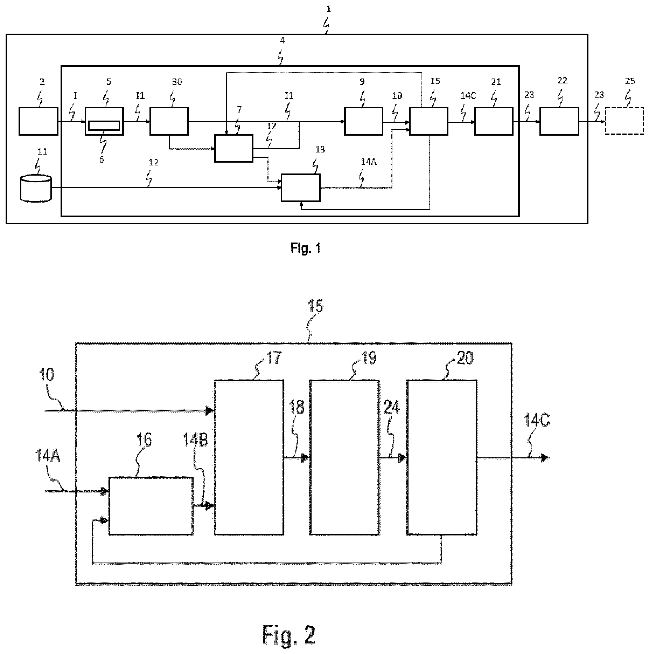

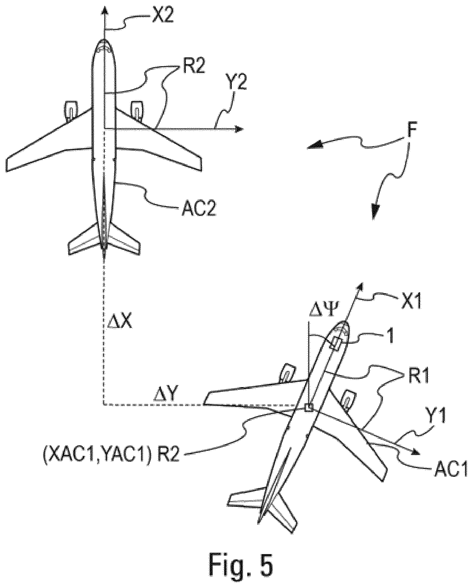

Le système 1, permettant d'illustrer l'invention et représenté de façon schématique sur la figure 1, est un système de détermination du positionnement d'un aéronef suiveur AC1 par rapport à un aéronef meneur AC2, ledit aéronef meneur AC2 volant devant ledit aéronef suiveur AC1, ledit aéronef meneur AC2 et ledit aéronef suiveur AC1 étant destinés à réaliser un vol en formation comme représenté sur la figure 5.

On entend par vol en formation, une formation F composée d'au moins un aéronef suiveur AC1 et d'au moins un aéronef meneur AC2, ledit aéronef suiveur AC1 suivant (en vol) ledit aéronef meneur AC2. Une telle formation F, représentée schématiquement sur la figure 5, qui est généralement mise en œuvre lors d'un vol en croisière, permet notamment à l'aéronef suiveur AC1 de bénéficier d'une réduction de traînée et ainsi de réaliser des économies de carburant. Toutefois, la réduction de consommation de carburant pour l'aéronef suiveur AC1 est significative uniquement dans le cas où ledit aéronef suiveur AC1 vole derrière l'aéronef meneur AC2 dans un intervalle de positions donné.

Le positionnement de l'aéronef suiveur AC1 par rapport à l'aéronef meneur AC2 doit donc être rapide et précis. Un tel vol en formation notamment de l'aéronef suiveur AC2 peut être réalisé par l'intermédiaire d'un pilotage automatique, ou bien d'un pilotage manuel, par exemple à l'aide d'un directeur de vol, ou à l'aide de références visuelles extérieures telles qu'une vue de l'aéronef meneur ou des trainées de condensation de l'aéronef meneur.

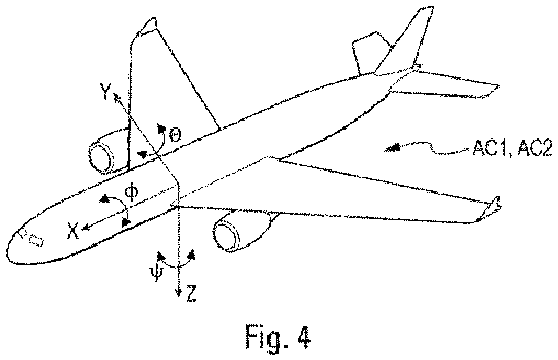

Dans un mode de réalisation préféré (représenté sur la figure 4), la position d'un objet par rapport à l'un quelconque des aéronefs AC1, AC2 est définie par les coordonnées spatiales dudit objet, exprimées dans un repère cartésien associé à l'aéronef AC1, AC2 correspondant. Chaque aéronef AC1, AC2 est muni d'un repère cartésien en trois dimensions dont l'origine est un point particulier, connu, dudit aéronef AC1, AC2. Lesdites trois dimensions sont définies par trois axes orthogonaux notés X, Y et Z. De plus, l'origine du repère d'un aéronef AC1, AC2 peut être son centre de gravité moyen, ou un point de la partie avant du fuselage de l'aéronef (i.e. du nez de l'aéronef).

Aussi, tel qu'illustré sur la figure 5, l'aéronef suiveur AC1 est muni d'un repère R1 cartésien en trois dimensions, défini par les axes (X1, Y1, Z1), et l'aéronef meneur AC2 est muni d'un repère R2 cartésien en trois dimensions, défini par les axes (X2, Y2, Z2). La position d'un point dans un repère, par exemple dans le repère R1, est donnée par ses coordonnées selon les axes (X1, Y1, Z1). Plus particulièrement, dans le cas présent, on s'intéresse à la position de l'aéronef suiveur AC1 par rapport à l'aéronef meneur AC2. Une telle position est donnée par les coordonnées de l'origine du repère R1 de l'aéronef suiveur AC1 dans le repère R2 de l'aéronef meneur AC2, notée (XAC1, YAC1, ZAC1)_{R2.}

Dans ce même mode de réalisation préféré, l'orientation de l'aéronef suiveur AC1 dans le repère de l'aéronef meneur AC2 est définie par trois angles selon les trois mouvements de rotation usuels de l'aéronef : l'angle de roulis, noté Φ, l'angle de tangage, noté Θ, et l'angle de lacet, noté Ψ. L'orientation de l'aéronef suiveur AC1 par rapport à l'aéronef meneur AC2 peut aussi être définie par les écarts angulaires (notés ΔΦ, ΔΘ, ΔΨ) représentant les différences entre, respectivement, les angles notés ΦAC1 (angle de roulis de l'aéronef suiveur AC1 dans le repère de l'aéronef meneur AC2) et ΦAC2 (angle de roulis de l'aéronef meneur AC2 dans le repère de l'aéronef meneur AC2), les angles notés ΘAC1 (angle de tangage de l'aéronef suiveur AC1 dans le repère de l'aéronef meneur AC2) et ΘAC2 (angle de tangage de l'aéronef meneur AC2 dans le repère de l'aéronef meneur AC2), et les angles notés ΨAC1 (angle de lacet de l'aéronef suiveur AC1 dans le repère de l'aéronef meneur AC2) et ΨAC2 (angle de lacet de l'aéronef meneur AC2 dans le repère de l'aéronef meneur AC2).

La figure 5, illustrant schématiquement une formation F en vue de dessus, permet d'illustrer clairement l'écart angulaire ΔΨ qui correspond à un écart angulaire entre l'angle de lacet de l'aéronef suiveur AC1 et l'angle de lacet de l'aéronef meneur AC2 dans le référentiel terrestre (l'angle de lacet étant l'angle entre la direction de l'avion et le nord magnétique ou géographique). Les écarts angulaires ΔΦ et ΔΘ sont définis par analogie.

On entend par positionnement de l'aéronef suiveur AC1 par rapport à l'aéronef meneur AC2, la position et l'orientation dudit aéronef suiveur AC1 par rapport audit aéronef meneur AC2. En effet, la connaissance des coordonnées (XAC1, YAC1, ZAC1)_{R2} et des écarts angulaires (ΔΦ, ΔΘ, ΔΨ)_{R2} correspondent à des données de positionnement 23 qui définissent le positionnement de l'aéronef suiveur AC1 par rapport à l'aéronef meneur AC2 selon les six degrés de liberté.

Le système 1 est monté sur l'aéronef suiveur AC1, comme illustré sur la figure 5, et il est configuré pour déterminer en temps réel les données de positionnement 23. L'objectif d'une telle détermination de positionnement est de fournir des données de positionnement 23 à un dispositif utilisateur 25 représenté schématiquement en pointillés sur la figure 1. Dans un mode de réalisation préféré, le dispositif utilisateur 25 détermine des consignes de vol à partir des données de positionnement 23, notamment pour un pilotage automatique (et autonome) de l'aéronef suiveur AC1 lors du vol en formation.

Le système 1 comporte, comme représenté sur la figure 1, un dispositif d'acquisition 2 destiné à être monté sur l'aéronef suiveur AC1. Le dispositif d'acquisition 2 est configuré pour acquérir des images I de l'aéronef meneur AC2, vu de l'arrière, ou en partie de côté, à partir dudit aéronef suiveur AC1.

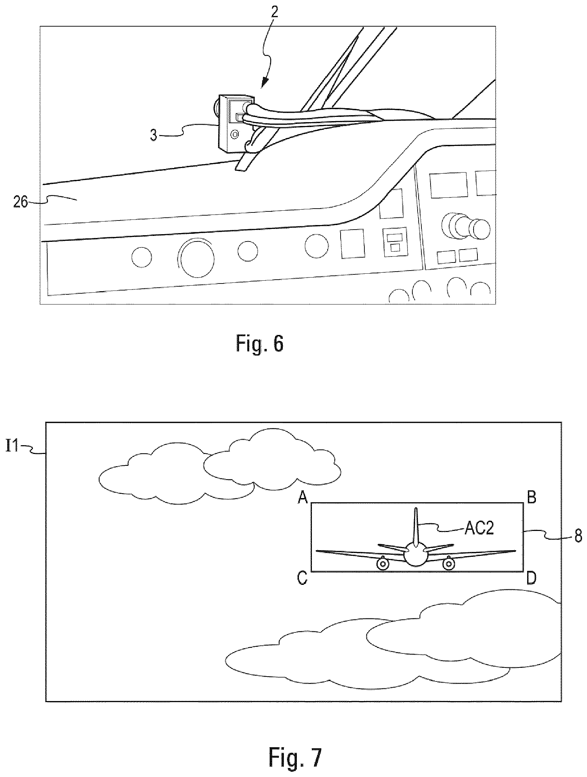

Le dispositif d'acquisition 2 comprend au moins une caméra vidéo 3 permettant d'obtenir des images. La résolution de la caméra vidéo dépend de la zone de déplacement de l'aéronef meneur AC2 que l'on souhaite couvrir. Par exemple, la caméra vidéo peut avoir une résolution d'au moins 5 millions de pixels. Le dispositif d'acquisition peut comprendre plusieurs caméras vidéo permettant d'obtenir des images. Dans ce cas, en fonction de la zone de déplacement de l'aéronef meneur AC2 que l'on souhaite couvrir, chaque caméra vidéo peut avoir une résolution inférieure à 5 millions de pixels. Dans un mode de réalisation, la caméra vidéo 3 est fixée dans le cockpit 26 de l'aéronef suiveur AC1, comme représenté à titre d'illustration sur la figure 6. Dans le cadre de la présente invention, la caméra vidéo peut être agencée à d'autres endroits de l'aéronef suiveur AC1 où elle est en mesure de prendre des images de l'environnement situé à l'avant dudit aéronef suiveur AC1. La caméra vidéo 3 est configurée de manière à pouvoir prendre des images de l'aéronef meneur AC2 sous forme de flux vidéo. Par exemple, la caméra vidéo 3 peut être fixée sur la pointe avant du fuselage de l'aéronef suiveur AC1.

De plus, le système 1 comporte une unité de traitement d'image 4 (figure 1) qui est configurée pour traiter, en temps réel, les images I acquises par le dispositif d'acquisition 2 selon des traitements d'image décrits ci-après. Selon l'invention, « en temps réel » signifie que le temps de latence pour le traitement d'une image est inférieur à un temps limite qui permet la bonne performance des lois de l'automatique, implémentées de manière informatique, qui asservissent la position de l'aéronef.

Plus précisément, l'unité de traitement d'image 4 comprend une unité de réception 5 apte à recevoir les images I acquises par le dispositif d'acquisition 2. L'unité de réception 5 comporte, notamment, une mémoire 6 pour enregistrer lesdites images I. La mémoire 6 est configurée pour stocker les images I et pour mettre à disposition itérativement chaque image I à d'autres éléments de l'unité de traitement d'image 4. Chaque image I, une fois mise à disposition à des éléments de l'unité de traitement d'image 4, est considérée comme étant en cours de traitement, et devient une image courante I1 (figure 7).

Dans un mode de réalisation, la mémoire 6 est une mémoire cache configurée pour enregistrer les images générées par le dispositif d'acquisition 2 de façon temporaire. En effet, les images I sont stockées puis transférées aux éléments appropriés de l'unité de traitement d'images 4. Les images I ne restent donc en mémoire que le temps du traitement de l'image courante I1 précédente. De plus, une telle mémoire cache est configurée pour transférer des données à très grande vitesse, ce qui permet de traiter les images I en temps réel.

L'unité de traitement d'image 4 comporte une unité de vérification 30 configurée pour vérifier si l'image I reçue par l'unité de réception 5 est la première image reçue ou non (i.e. s'il s'agit d'une première itération ou si une itération a déjà eu lieu), et pour vérifier si la valeur d'un paramètre, dit score, est enregistrée dans une mémoire de l'unité de traitement d'image 4 (ce score étant issu d'une itération précédente).En outre, l'unité de traitement d'image 4 comporte une unité de détection 7 apte à recevoir une image courante I1 fournie par l'unité de réception 5. L'unité de détection 7 est configurée pour analyser l'image courante I1 reçue et en particulier pour identifier, sur ladite image courante I1, l'aéronef meneur AC2 (figure 7). Dans un mode de réalisation particulier, l'unité de détection 7 est apte à analyser des images monochromes ou des images en couleurs. L'unité de détection ne reçoit pas l'image courante I1 à chaque acquisition d'image. L'unité de détection 7 est configurée pour recevoir et analyser une image courante I1 uniquement lors d'une première acquisition d'image et lorsque la valeur du score enregistré dans une mémoire de l'unité de traitement d'image 4 est supérieure à un seuil prédéterminé.

Selon l'invention et pour la suite de la description, une valeur « inférieure » à un seuil est considérée comme étant « strictement inférieure » audit seuil, et une valeur « supérieure » à un seuil est considérée comme étant « supérieure ou égale » audit seuil.

Lors d'une première acquisition d'image sur laquelle l'aéronef meneur AC2 est visible, il est nécessaire d'utiliser l'unité de détection 7 pour trouver l'aéronef meneur AC2 sur l'image. Lors des acquisitions suivantes, et tant que la valeur du score est inférieure au seuil prédéterminé, il n'est pas nécessaire d'utiliser l'unité de détection 7 pour trouver l'aéronef meneur AC2 sur l'image, puisque sa position dans l'image est sensiblement connue (les images successives sont acquises avec un pas de temps faible, et de ce fait la position de l'aéronef meneur sur deux images successives ne varie que faiblement). Lorsque la valeur du score devient supérieure au seuil prédéterminé, il est considéré que la position de l'aéronef meneur AC2 est trop éloignée de la position qu'il avait sur l'image précédente, et de ce fait qu'une nouvelle détection de l'aéronef meneur AC2 au moyen de l'unité détection 7 est nécessaire.

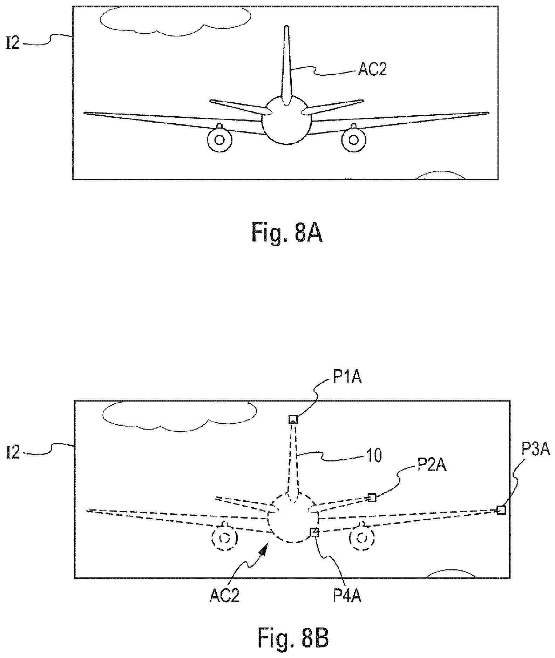

De plus, l'unité de détection 7 peut être configurée pour isoler l'aéronef meneur AC2 sur l'image courante I1, et pour générer une image recadrée I2 (figure 8A) correspondante. L'image recadrée I2, ainsi générée, correspond à une partie de l'image courante I1 contenant complètement (ou englobant) l'aéronef meneur AC2. L'unité de détection 7 peut également être configurée pour isoler l'aéronef meneur AC2 sur l'image courante I1, et pour générer des informations correspondant à la zone de l'image courante I1 où se situe l'aéronef meneur AC2.

Dans un mode de réalisation, l'image recadrée I2 est la plus petite image, incluse dans l'image courante I1, contenant complètement l'aéronef meneur AC2. L'image recadrée I2 est ainsi plus petite que l'image courante I1, ce qui rend les opérations de traitement d'image beaucoup plus rapides et donc plus efficaces dans un contexte d'analyse de flux d'images en temps réel.

Dans un mode de réalisation particulier, tel qu'illustré sur la figure 7, l'unité de détection 7 peut être configurée pour déterminer les coordonnées de quatre points A, B, C et D sur l'image courante I1. Les points A, B C et D représentent les sommets d'un rectangle et permettent de définir un cadre 8 rectangulaire contenant complètement l'aéronef meneur AC2. Le cadre 8 délimite la portion de l'image courante I1 correspondant à l'image recadrée I2.

L'unité de traitement d'image 4 comporte également une unité d'extraction 9 apte à recevoir l'image recadrée I2 générée par l'unité de détection 7 (lors d'une première acquisition d'image et lorsque la valeur du score enregistré dans une mémoire de l'unité de traitement d'image 4 est supérieur à un seuil prédéterminé). L'unité d'extraction 9 est configurée pour réaliser des opérations de traitement d'image sur l'image recadrée I2 de manière à obtenir des coordonnées, sur ladite image recadrée I2, d'un ensemble de points correspondant à un contour 10 (figure 8B) de l'aéronef meneur AC2. L'unité d'extraction 9 peut être configurée pour recevoir les informations correspondant au cadre 8 rectangulaire contenant complètement l'aéronef meneur AC2 (par exemple, les coordonnées des points A, B, C et D), au lieu de recevoir l'image recadrée I2 directement.

L'unité de d'extraction 9 est également configurée pour recevoir directement l'image courante I1 (lorsque la valeur du score enregistré dans une mémoire de l'unité de traitement d'image 4 est inférieure au seuil prédéterminé), et pour réaliser des opérations de traitement d'image sur l'image courante I1 de manière à obtenir des coordonnées, sur ladite image courante I1, d'un ensemble de points correspondant à un contour 10 de l'aéronef meneur AC2.

Dans un mode de réalisation particulier, les opérations de traitement d'image mises en œuvre par l'unité d'extraction 9 consistent à appliquer des filtres sur l'image recadrée I2 pour identifier les points correspondant au contour 10 (figure 8B), notamment des filtres usuels de Gauss et de Sobel. En effet, de tels filtres permettent, par calcul des gradients locaux en chaque point (pixel) de l'image recadrée I2, de déterminer si ledit point correspond à un contour. Des exemples d'image recadrée I2 et de contour 10 obtenus par de telles opérations de traitement d'image sont représentés, respectivement, sur les figures 8A et 8B. Les opérations de traitement d'image mises en œuvre par l'unité d'extraction 9 peuvent également consister à appliquer ces filtres sur la partie de l'image correspondant au cadre 8 rectangulaire contenant complètement l'aéronef meneur AC2 pour identifier les points correspondant au contour 10.

Par ailleurs, le système 1 comporte une base de données 11 comprenant un modèle en trois dimensions 12 de l'aéronef meneur AC2, représentant un modèle en trois dimensions complet du pourtour extérieur de l'aéronef meneur AC2. Dans un mode de réalisation préféré, la base de données 11 contient les modèles en trois dimensions de tous les types d'aéronefs susceptibles d'être suivis (en vol en formation) par l'aéronef suiveur AC1.

Le modèle en trois dimensions de l'aéronef meneur AC2 peut être déterminé préalablement au vol de l'aéronef suiveur AC1. Par exemple, il est possible de communiquer à l'unité de traitement d'image 4 le numéro de vol ou le numéro d'immatriculation de l'aéronef meneur AC2.

En variante, le modèle de l'aéronef meneur AC2 peut être déterminé par l'unité de détection 7, à partir d'une analyse des caractéristiques aérodynamiques de l'aéronef meneur AC2. Par exemple, la forme, l'envergure des ailes ou le nombre de réacteurs peuvent être déterminés sur l'image recadrée I2 ou sur la zone de l'image courante I1 correspondant au cadre 8 rectangulaire comprenant entièrement l'aéronef meneur AC2.

Avec ces informations, l'unité de traitement d'image 4 détermine le modèle de l'aéronef et quel modèle en trois dimensions 12 il faut prendre en compte et extraire de la base de données 11 pour la suite du traitement d'image.

Dans un mode de réalisation particulier non représenté, la base de données 11 fait partie de l'unité de traitement d'image 4.

En outre, l'unité de traitement 4 comporte une unité de détermination 13 configurée pour déterminer un profil de l'aéronef meneur AC2 à partir du modèle en trois dimensions 12 de l'aéronef meneur AC2 et d'une position initiale de l'aéronef suiveur AC1 par rapport à l'aéronef meneur AC2. Pour ce faire, l'unité de détermination 13 est configurée pour, à partir de l'image recadrée I2, commander une visualisation du modèle en trois dimensions 12 avec un positionnement tel que le profil 14A dudit modèle en trois dimensions 12 ainsi obtenu corresponde grossièrement au profil de l'aéronef meneur AC2 sur l'image recadrée I2. Plus précisément, le profil 14A de l'aéronef meneur correspond à une vue simulée du modèle en trois dimensions de l'aéronef meneur AC2 depuis la caméra 3 positionnée sur l'aéronef suiveur AC1. Le profil 14A correspond sensiblement à la vue de l'aéronef meneur AC2, en termes de position et d'orientation, sur l'image I1 ou sur l'image recadrée I2. Le profil 14A correspond ainsi sensiblement au contour 10 de l'aéronef meneur AC2.

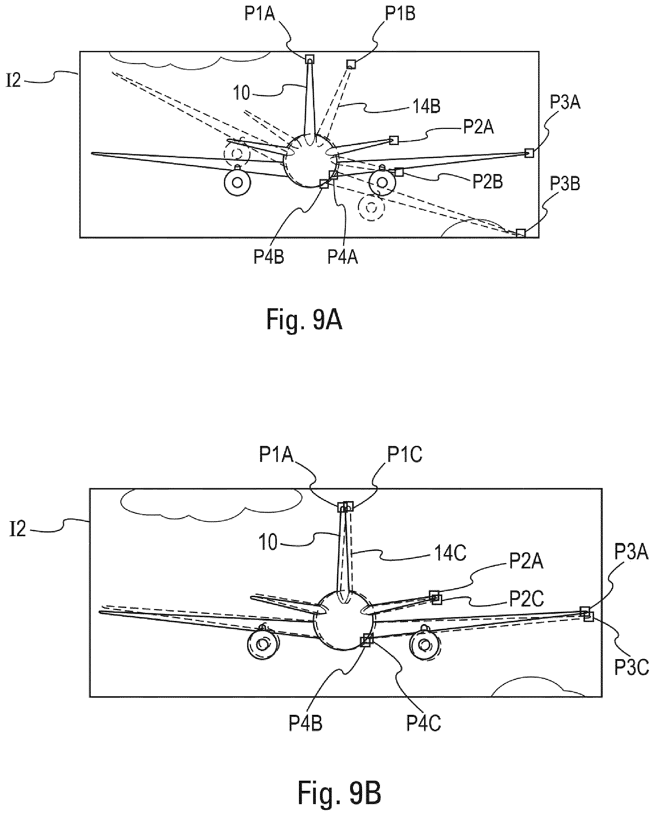

L'unité de traitement d'image 4 comporte également une unité de recalage 15 apte à recevoir le contour 10 de l'unité d'extraction 9 et le profil 14A de l'unité de détermination 13. L'unité de recalage 15, représentée sur la figure 2, est configurée pour comparer le profil 14A avec le contour 10 de l'aéronef meneur AC2, afin de déterminer l'ajustement nécessaire à l'obtention d'une correspondance optimale, selon des critères définis préalablement. L'unité de recalage 15 permet donc d'obtenir un profil optimisé 14C à partir d'une comparaison du contour 10 de l'aéronef meneur AC2 avec son profil 14A. L'unité de recalage 15 utilise un algorithme de recalage des contours, détaillé ci-dessous. L'exemple représenté sur les figures 9A et 9B et décrit ci-dessous permettra de mieux comprendre le principe de recalage présenté.

L'unité de recalage 15 comprend les éléments suivants, représentés sur la figure 2, et mettant en œuvre un traitement itératif (en temps réel) tel que précisé ci-dessous :
- un élément de détermination 16 configuré pour, en présence d'une itération précédente, déterminer un nouveau profil14B (figure 9A) de l'aéronef meneur AC2, à partir du modèle en trois dimensions de l'aéronef meneur AC2 et en fonction des données de l'itération précédente. Pour la première itération, le profil 14A est utilisé pour initier la boucle d'itérations ;
- un élément de comparaison 17 configuré pour comparer les pixels du profil 14A ou du nouveau profil 14B (selon l'itération) et les pixels du contour 10 et ainsi obtenir une comparaison 18 ;
- un élément d'identification 19 configuré pour identifier des points de contrôle P1A, P2A, P3A et P4A du contour 10 de l'aéronef meneur AC2 qui correspondent, respectivement, à des points de contrôle P1B, P2B, P3B et P4B du profil 14A ou du nouveau profil 14B (figure 9A) (selon l'itération) de manière à obtenir des paires de points de contrôle 24. On entend par « correspondre » le fait que les points de contrôle P1A, P2A, P3A et P4A du contour 10 sont situés sur les même points caractéristiques que les points de contrôle P1B, P2B, P3B et P4B du profil 14A ou du nouveau profil 14B. L'identification est réalisée pour un nombre prédéterminé de points de contrôle. Les points de contrôle, dont certains P1A à P4A, P1B à P4B et P1C à P4C sont mis en évidence sur les figures 8A, 9A et 9B, correspondent à des points caractéristiques (pixels), tels que des arêtes par exemple, du contour considéré. Pour ce faire, on part d'un point de contrôle et on cherche un point similaire dans une direction orthogonale au contour (équivalente à la direction du gradient local) jusqu'à une distance maximale, par exemple 20 pixels. Si un tel point n'est pas trouvé, on considère qu'il n'existe pas de point de contrôle suffisamment similaire et ce point est exclu ; et
- un élément de calcul 20 configuré pour calculer les distances entre les points de contrôle de chaque paire de points de contrôle 24 et pour déterminer si le profil 14A ou le nouveau profil 14B est suffisamment proche du contour 10. L'élément de calcul 20 est également configuré pour calculer une valeur du score de l'itération correspondant à la somme des distances déterminées pour l'ensemble des paires. Autrement dit, l'élément de calcul 20 est configuré pour calculer une valeur du score de l'itération à partir de l'écart entre le contour 10 et le profil 14A ou le nouveau profil 14B. Si la valeur du score est inférieure au seuil prédéterminé, on considère que le profil 14A ou le nouveau profil 14B correspond à un profil 14C (figure 9B), et si la valeur du score est supérieure au seuil prédéterminé, il est nécessaire de réaliser une nouvelle itération du traitement itératif.

Plus précisément, l'élément de calcul 20 :
- détermine, pour chaque paire de points de contrôle, par exemple pour la paire de points de contrôle P2A et P2B (figure 9A), une distance dite individuelle entre les points de contrôle ;
- détermine une valeur du score à partir des distances individuelles ainsi déterminées pour l'ensemble des paires. Ce score représente une métrique de comparaison qui peut correspondre à la somme des distances, c'est-à-dire à une distance globale. Ce score peut également être calculé d'une autre manière, par exemple par une méthode des moindres carrés ;
- compare cette valeur à un seuil prédéterminé, et en fonction de cette comparaison :
   - si la valeur du score est supérieure au seuil prédéterminé, c'est-à-dire si le profil 14A ou le nouveau profil 14B est trop éloigné du contour 10, on met en œuvre une nouvelle itération, à l'aide de données comprenant au moins lesdites distances ; et
   - si la valeur du score est inférieure au seuil prédéterminé, c'est-à-dire si le profil 14A ou le nouveau profil 14B est suffisamment proche du contour 10, on considère ledit profil comme profil optimisé et on le conserve pour le transmettre, comme précisé ci-dessous.

A titre d'illustration :
- sur l'exemple de la figure 9A, on considère que la valeur du score, par exemple la distance globale (somme des distances individuelles entre les paires P1A et P1B, P2A et P2B, P3A et P3B, P4A et P4B) est trop élevée ;
- en revanche, sur l'exemple de la figure 9B, on considère que la valeur du score est inférieure au seuil prédéterminé. On dispose ainsi d'un profil optimisé 14C (avec des points de contrôle P1C à P4C) dont les distances individuelles entre les paires P1A et P1C, P2A et P2C, P3A et P3C, P4A et P4C (figure 9B) sont suffisamment réduites.

L'unité de recalage 15 est donc apte à déterminer, par ajustements successifs (lors de la mise en œuvre du traitement itératif), un profil optimisé 14C correspondant au contour 10, comme illustré sur les figures 9A.

Dans un mode de réalisation, l'unité de traitement d'image 4 est configurée pour commander une nouvelle détection de l'aéronef meneur AC2 et la génération d'un nouveau profil 14B dans le cas où aucune correspondance entre le nouveau profil 14B et le contour 10 n'est obtenue. En effet, dans le cas où l'élément de calcul 20 ne parvient pas à converger vers une correspondance suffisante entre le nouveau profil 14B et le contour 10, l'unité de recalage 15 est configurée pour communiquer avec l'unité de détection 7 et l'unité de détermination 13. L'unité de recalage 15 commande alors à l'unité de détection 7 une réinitialisation de la détection de l'aéronef meneur AC2 sur l'image courante I1, générant une nouvelle image recadrée I2 ou des informations correspondant à la zone de l'image courante I1 où se situe l'aéronef meneur AC2 (par exemple les coordonnées des points A, B, C et D délimitant le cadre contenant intégralement l'aéronef meneur AC2). Une nouvelle estimation de la pose de l'aéronef meneur AC2 est réalisée. L'unité de recalage 15 commande ensuite à l'unité de détermination 13 une nouvelle détermination de profil 14A à partir de la nouvelle image recadrée I2 ou des informations de la zone de l'image courante I1 où se situe l'aéronef meneur AC2. L'unité de recalage 15 met alors en œuvre un nouveau traitement itératif de la nouvelle image recadrée I2 ou de l'image courante I1 avec les informations de la zone de l'image courante I1 où se situe l'aéronef meneur AC2 tel que décrit ci-dessus.

Par ailleurs, dans un mode de réalisation préféré, le modèle en trois dimensions 12 prend en compte des déformations de l'aéronef meneur AC2. En effet, le modèle en trois dimensions 12 est enregistré dans la base de données 11 de telle sorte que l'unité de détermination 13 est capable de générer un profil de l'aéronef meneur AC2 avec les déformations que ledit aéronef meneur AC2 est susceptible de subir lors d'un vol. Par exemple, si l'aéronef meneur AC2 présente des déformations au niveau des ailes, l'unité de détermination 13 est configurée pour proposer à l'unité de recalage 15 un nouveau profil 14B présentant des déformations au niveau des ailes.

Un tel modèle en trois dimensions 12 permet d'adapter le profil déterminé par l'unité de détermination 13 au profil réel de l'aéronef meneur AC2 en temps réel et d'obtenir une correspondance optimale entre le nouveau profil 14B et le contour 10. Cette correspondance optimale permet une estimation plus précise du positionnement de l'aéronef suiveur AC1 par rapport à l'aéronef meneur AC2.

En outre, l'unité de traitement d'image 4 comporte une unité de détermination 21 configurée pour recevoir et traiter les données provenant de l'unité de recalage 15. L'unité de détermination 21 est configurée pour déterminer, à partir du profil optimisé 14C et du modèle en trois dimensions 12 de l'aéronef meneur AC2, le positionnement (X1, Y1, Z1 ; ΔΦ, ΔΘ, ΔΨ)_{R2} de l'aéronef suiveur AC1 par rapport à l'aéronef meneur AC2. Les données de positionnement de l'aéronef suiveur AC1 par rapport à l'aéronef meneur AC2 sont une entrée de la détermination du profil optimisé 14C. En effet, à partir du profil optimisé 14C et du modèle en trois dimensions 12 de l'aéronef meneur AC2, l'unité de détermination 21 est configurée pour déterminer la position et l'orientation du dispositif d'acquisition 2 prenant les images dudit aéronef meneur AC2. De plus, les caractéristiques du dispositif d'acquisition 2 monté sur l'aéronef suiveur AC1 étant connues, notamment sa position et son orientation par rapport au référentiel de l'aéronef suiveur AC1, par déduction, on a accès aux données de positionnement 23.

Le système 1 comporte également une unité de transmission 22 configurée pour transmettre les données de positionnement 23 fournies par l'unité de détermination 21 de l'unité de traitement d'image 4 au dispositif utilisateur 25. Un tel dispositif utilisateur 25 est capable d'analyser les données de positionnement 23 et de les utiliser, notamment pour établir une consigne de vol pour l'aéronef suiveur AC1 afin de réaliser le vol en formation F.

Dans un mode de réalisation préféré, l'aéronef suiveur AC1 est piloté de façon autonome à partir des données de positionnement 23 pour se positionner exactement dans la formation, et également à partir d'autres données de positionnement. Une fusion de données peut être mise en œuvre pour le pilotage de l'aéronef suiveur AC1.

Dans un mode de réalisation particulier, l'unité de transmission 22 transmet les données de positionnement 23 au dispositif utilisateur 25 au moyen d'un bus Ethernet utilisant un protocole de communication VCOM. Bien entendu, un autre moyen de communication peut être utilisé pour transmettre les données de positionnement 23 au dispositif utilisateur 25.

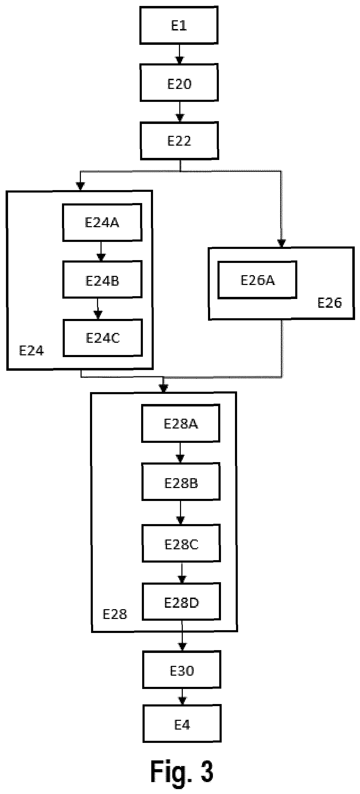

Le système 1, tel que décrit ci-dessus, est en mesure de mettre en œuvre un procédé P de détermination du positionnement de l'aéronef suiveur AC1 par rapport à l'aéronef meneur AC2 volant devant l'aéronef suiveur AC1. Ledit procédé P de détermination de positionnement met en œuvre, de façon itérative, la suite d'étapes successives décrite ci-après et illustrée par la figure 3, en lien avec le système 1 représenté sur les figures 1 et 2.

Le procédé P comporte tout d'abord une étape d'acquisition d'une image E1, mise en œuvre par l'unité d'acquisition 2, qui consiste à prendre des images I successives de l'aéronef meneur AC2 à partir de l'aéronef suiveur AC1, à l'aide du dispositif d'acquisition 2.

Le procédé P comporte ensuite une étape de traitement d'image E2, mise en œuvre par l'unité de traitement d'image 4, qui consiste à traiter les images I fournies lors de l'étape d'acquisition E1 pour obtenir le positionnement de l'aéronef suiveur AC1 par rapport à l'aéronef meneur AC2.

A cet effet, l'étape de traitement d'image E2 comprend la série d'étapes décrite ci-dessous.

L'étape de traitement d'image E2 comporte tout d'abord une étape de réception E20, mise en œuvre par l'unité de réception 5, qui consiste à recevoir les images I acquises à l'étape d'acquisition E1 et à mettre à disposition lesdites images I l'une après l'autre. L'image fournie à l'instant courant est désignée image courante I1. L'étape de réception E20 consiste également à stocker les images I de façon temporaire, le temps du traitement de l'image courante I1.

L'étape de traitement d'image E2 comporte une étape de vérification E22 de la présence ou de l'absence d'une itération précédente, et de la valeur du score assorti à l'itération précédente.

L'étape de traitement d'image E2 comporte, de plus, une étape d'initialisation E24, qui est mise en œuvre si une absence d'itération précédente ou une itération précédente assortie d'un score supérieur à un seuil prédéterminé a été détectée au cours de l'étape de vérification E22.

L'étape d'initialisation E24 comprend une sous-étape de détection E24A, mise en œuvre par l'unité de détection 7, qui consiste à recevoir l'image courante I1 fournie lors de la sous-étape de réception E20 et à détecter sur ladite image courante I1 l'aéronef meneur AC2. Dans un mode de réalisation, la sous-étape de détection E24A utilise des méthodes d'apprentissage profond faisant intervenir des réseaux de neurones convolutifs afin de détecter l'aéronef meneur AC2 sur l'image courante I1. De telles méthodes nécessitent un paramétrage au préalable desdits réseaux de neurones, notamment au moyen d'un entraînement à la détection d'un aéronef sur une image. Ledit entraînement consiste, par exemple, à soumettre aux réseaux de neurones des jeux d'images enrichies, c'est-à-dire des images contenant des aéronefs sur lesquels lesdits aéronefs sont déjà identifiés (par leurs coordonnées sur l'image ou par indexation notamment).

La sous-étape de détection E24A peut également consister à générer une nouvelle image, dite image recadrée I2, à partir de de l'image courante I1. La sous-étape de détection E24A peut comprendre une transmission d'informations concernant la zone de l'image courante I1 où se situe l'aéronef meneur AC2 (par exemple les coordonnées des points A, B, C et D délimitant le cadre 8 rectangulaire contenant entièrement l'aéronef meneur AC2), à la place d'une transmission d'une image recadrée I2. Une telle image recadrée I2 correspond à une partie de l'image courante I1 contenant complètement (ou englobant) l'aéronef meneur AC2, comme représenté sur la figure 7.

Dans un mode de réalisation particulier, l'image recadrée I2 est délimitée par le plus petit cadre rectangulaire contenant complètement l'aéronef meneur AC2.

Au cours de la sous-étape de détection E24A, le modèle en trois dimensions de l'aéronef meneur AC2 peut être déterminé, à partir d'une analyse des caractéristiques aérodynamiques de l'aéronef meneur AC2, telles que la forme de l'aéronef, l'envergure des ailes ou le nombre de réacteurs de l'aéronef meneur AC2. Le modèle en trois dimensions de l'aéronef meneur AC2 peut également être déterminé préalablement au vol de l'aéronef suiveur AC1, par exemple en connaissant le numéro de vol de l'aéronef meneur AC2 ou son numéro d'immatriculation. Le modèle en trois dimensions 12 prend avantageusement en compte les déformations de l'aéronef meneur AC2 en vol.

L'étape d'initialisation E24 comporte, en outre, une sous-étape d'extraction E24B, mise en œuvre par l'unité d'extraction 9, qui consiste à recevoir l'image recadrée I2 fournie à la sous-étape de détection E24A et à appliquer des opérations de traitement d'image sur ladite image recadrée I2 pour déterminer un ensemble de points correspondant à un contour 10 de l'aéronef meneur AC2 comme représenté sur la figure 8B. La sous-étape d'extraction E24B peut également consister à recevoir les informations relatives à la zone de l'image courante I1 où se situe l'aéronef meneur AC2 (informations concernant le cadre 8 rectangulaire délimité par les points A, B, C et D) et à appliquer des opérations de traitement d'image sur cette zone de l'image courante I1 pour déterminer un ensemble de points correspondant à un contour 10 de l'aéronef meneur AC2.

Dans un mode de réalisation particulier, le traitement d'image mis en œuvre à la sous-étape d'extraction E24B consiste à calculer, pour chaque pixel de l'image recadrée I2, le gradient local. L'information de gradient local permet de déterminer si un pixel appartient à un contour. De tels calculs sont réalisés en appliquant des filtres, notamment des filtres de Gauss et de Sobel.

L'étape d'initialisation E24 comporte également une sous-étape de détermination E24C, mise en œuvre par l'unité de détermination 13, consistant à déterminer un profil de l'aéronef meneur AC2 à partir du modèle en trois dimensions 12 de l'aéronef meneur AC2, enregistré dans la base de données 11, et de la position initiale de l'aéronef suiveur AC1 par rapport à l'aéronef meneur AC2. Le profil 14A est une visualisation du modèle en trois dimensions 12 avec un positionnement correspondant grossièrement à celui du profil de l'aéronef meneur AC2 sur l'image recadrée I2.

L'étape de traitement d'image E2 comporte une étape de continuation E26 comprenant une sous-étape d'extraction E26A du contour 10 de l'aéronef meneur AC2. Cette étape de continuation E26 est mise en œuvre si une itération précédente assortie d'un score inférieur au seuil prédéterminé est détectée. Cette étape de continuation E26 est successive à une étape d'initialisation E24 d'une itération précédente, c'est-à-dire que l'étape de continuation E26 n'est mise en œuvre qu'après la mise en œuvre de l'étape d'initialisation E24 d'une itération précédente. Il y a différentes étapes entre l'étape d'initialisation E24 d'une itération précédente et l'étape de continuation E26. Autrement dit, l'étape d'initialisation E24 d'une itération précédente et l'étape de continuation E26 ne sont pas directement successives.

L'étape de traitement d'image E2 comporte également une étape d'ajustement E28, mise en œuvre par l'unité de recalage 15, qui consiste à recevoir le contour 10 et le profil 14A, puis à les comparer afin de déterminer l'ajustement nécessaire à appliquer pour obtenir une correspondance optimale selon des critères définis préalablement. Plus précisément, l'étape d'ajustement E28 consiste à déterminer, au moyen d'un algorithme de recalage des contours, un profil optimisé 14C à partir d'une comparaison du contour de l'aéronef meneur avec son profil et à calculer une valeur du score de l'itération à partir de l'écart entre le contour et le profil comparés.

A cet effet, l'étape d'ajustement E28 met en œuvre, en temps réel, de façon itérative, les sous-étapes suivantes :
- en présence d'une itération précédente, une sous-étape de détermination E28A, mise en œuvre par l'élément de détermination 16, consistant à déterminer un nouveau profil 14B de l'aéronef meneur AC2 à partir du modèle en trois dimensions de l'aéronef meneur et en fonction des données de l'itération précédente. La première itération utilise le profil 14A pour initier la suite d'opérations ;
- une sous-étape de comparaison E28B, mise en œuvre par l'élément de comparaison 17, consistant à comparer les pixels du profil 14A ou du nouveau profil 14B (selon l'itération) et les pixels du contour 10 ;
- une sous-étape d'identification E28C, mise en œuvre par l'élément d'identification 19, consistant à identifier des points de contrôle du contour 10 de l'aéronef meneur AC2 qui correspondent respectivement à des points de contrôle du profil 14A ou du nouveau profil 14B, de manière à obtenir des paires de points de contrôle 24. La sous-étape d'identification E28C peut se baser sur des mesures de gradients locaux ; et
- une sous-étape de calcul E28D, mise en œuvre par l'élément de calcul 20, consistant à calculer des distances entre les points de contrôle de chaque paire de points de contrôle 24 et à déterminer si le profil 14B est suffisamment proche du contour 10, auquel cas le profil correspond à un profil optimisé 14C et la suite d'opérations est arrêtée, ou bien s'il est nécessaire de déclencher une nouvelle itération. L'étape d'ajustement E28 consiste ainsi à mettre en œuvre un algorithme de recalage des contours pour déterminer un profil optimisé 14C à partir d'une comparaison du contour de l'aéronef meneur avec le profil 14A ou le nouveau profil 14B (selon l'itération). C'est au cours de cette sous-étape de calcul E28D qu'est calculée la valeur du score de l'itération qui correspond à la somme des distances déterminées pour l'ensemble des paires.

L'étape de traitement E2 comporte, finalement, une étape de détermination E30, mise en œuvre par l'unité de détermination 21 après l'étape d'ajustement E28. L'étape de détermination E30 consiste à déterminer le positionnement de l'aéronef suiveur AC1 par rapport à l'aéronef meneur AC2 à partir du profil optimisé 14C et du modèle en trois dimensions 12 de l'aéronef meneur AC2. En particulier, l'objet de cette étape de détermination E30 est de déterminer, à partir de ces données, les informations de positionnement (X1, Y1, Z1 ; ΔΦ, ΔΘ, ΔΨ)_{R2} de l'aéronef suiveur AC1 par rapport à l'aéronef meneur AC2.

Le procédé P comporte finalement une étape de transmission E4, mise en œuvre par l'unité de transmission 22 après l'étape de détermination E30. Cette étape de transmission E4 consiste à transmettre les données de positionnement 23 de l'aéronef suiveur AC1 par rapport à l'aéronef meneur AC2 au dispositif utilisateur 25 en vue de l'établissement d'une consigne de vol pour l'aéronef suiveur AC1 et afin de réaliser le vol en formation.

## Revendications

1. Procédé de détermination du positionnement d'un aéronef suiveur (AC1) par rapport à un aéronef meneur (AC2) volant devant l'aéronef suiveur, le procédé étant mis en œuvre par l'aéronef suiveur, et comprenant les étapes suivantes mises en œuvre de façon itérative :
- une étape d'acquisition (E1) d'une image, dans laquelle l'aéronef meneur est visible ;
- une étape de vérification (E22) de la présence ou de l'absence d'une itération précédente, et de la valeur d'un paramètre, dit score, assorti à chaque itération précédente ;
- si une absence d'itération précédente ou une itération précédente assortie d'un score supérieur à un seuil prédéterminé est détectée, une étape d'initialisation (E24) comprenant :
a) une sous-étape de détection (E24A) de l'aéronef meneur sur l'image,
b) une sous-étape d'extraction (E24B) du contour (10) dudit aéronef détecté et
c) une sous-étape de détermination (E24C) d'un profil (14A) de l'aéronef meneur à partir d'un modèle en trois dimensions (12) de l'aéronef meneur enregistré dans une base de données et d'une position initiale de l'aéronef suiveur par rapport à l'aéronef meneur ;
- si une itération précédente assortie d'un score inférieur à un seuil prédéterminé est détectée, une étape de continuation (E26), successive à une étape d'initialisation d'une itération précédente, et comprenant une sous-étape d'extraction (E26A) du contour de l'aéronef meneur ;
- dans tous les cas, une étape d'ajustement (E28) consistant à mettre en œuvre un algorithme de recalage des contours, pour déterminer un profil optimisé (14C) à partir d'une comparaison du contour de l'aéronef meneur avec son profil et à calculer une valeur du score de l'itération à partir de l'écart entre lesdits contour et profils comparés ;
- si la valeur du score est inférieure au seuil prédéterminé, une étape de détermination (E30) du positionnement de l'aéronef suiveur par rapport à l'aéronef meneur, à partir du profil optimisé et du modèle en trois dimensions de l'aéronef meneur.

2. Procédé selon la revendication 1, dans lequel l'étape d'ajustement (E28) comporte :
- en l'absence d'une itération précédente, les sous-étapes de comparaison (E28B) des pixels du profil (14A) avec les pixels du contour (10) de l'aéronef meneur (AC2) et d'identification (E28C) des points de contrôle du contour de l'aéronef meneur qui correspondent, respectivement, à des points de contrôle du profil (14A) de manière à obtenir des paires de points de contrôle (24) ;
- en présence d'une itération précédente, les sous-étapes de détermination (E28A) d'un nouveau profil (14B) de l'aéronef meneur (AC2) à partir du modèle en trois dimensions (12) de l'aéronef meneur en fonction des données de l'itération précédente, de comparaison (E28B) des pixels du nouveau profil (14B) avec les pixels du contour (10) de l'aéronef meneur (AC2) et d'identification (E28C) des points de contrôle du contour de l'aéronef meneur qui correspondent respectivement à des points de contrôle du nouveau profil (14B), de manière à obtenir des paires de points de contrôle (24) ;
- dans tous les cas, une sous-étape de calcul (E28D) d'une distance entre les points de contrôle de chaque paire de points de contrôle (24) et de la valeur du score de l'itération correspondant à la somme des distances déterminées pour l'ensemble des paires,.

3. Procédé selon la revendication 2, dans lequel la sous-étape d'identification (E28C) des points de contrôle du contour (10) de l'aéronef meneur (AC2) se base sur des mesures de gradients locaux,

4. Procédé selon l'une quelconque des revendications 1 à 3, comprenant une étape de transmission (E4) du positionnement déterminé de l'aéronef suiveur (AC1) par rapport à l'aéronef meneur (AC2) à au moins un dispositif utilisateur (25).

5. Procédé selon l'une quelconque des revendications 1 à 4, dans lequel le modèle en trois dimensions (12) de l'aéronef meneur (AC2) est déterminé préalablement au vol de l'aéronef suiveur (AC1).

6. Procédé selon l'une quelconque des revendications 1 à 4, dans lequel le modèle en trois dimensions (12) de l'aéronef meneur (AC2) est déterminé au cours de la sous-étape de détection (E24A), à partir d'une analyse des caractéristiques aérodynamiques de l'aéronef meneur (AC2).

7. Procédé selon l'une quelconque des revendications 1 à 6, dans lequel le modèle en trois dimensions (12) de l'aéronef meneur (AC2) prend en compte des déformations dudit aéronef meneur (AC2) en vol.

## Patentansprüche

1. Verfahren zur Bestimmung der Position eines nachfolgenden Luftfahrzeugs (AC1) in Bezug auf ein fliegendes führendes Luftfahrzeug (AC2) vor dem nachfolgenden Luftfahrzeug, wobei das Verfahren durch das nachfolgende Luftfahrzeug durchgeführt wird und die folgenden iterativ durchgeführten Schritte umfasst:
- einen Schritt der Erfassung (E1) eines Bildes, in dem das führende Luftfahrzeug sichtbar ist;
- einen Schritt der Überprüfung (E22) des Vorhandenseins oder des Nichtvorhandenseins einer vorhergehenden Iteration und des Wertes eines Parameters, genannt Score, der zu jeder vorhergehenden Iteration passt;
- wenn das Nichtvorhandensein einer vorhergehenden Iteration oder eine vorhergehende Iteration mit einem Score über einem vorbestimmten Schwellenwert detektiert wird, einen Initialisierungsschritt (E24), der Folgendes umfasst:
a) einen Unterschritt der Detektion (E24A) des führenden Luftfahrzeugs auf dem Bild,
b) einen Unterschritt der Extraktion (E24B) der Kontur (10) des detektierten Luftfahrzeugs und
c) einen Unterschritt der Bestimmung (E24C) eines Profils (14A) des führenden Luftfahrzeugs anhand eines in einer Datenbank gespeicherten dreidimensionalen Modells (12) und einer Ursprungsposition des nachfolgenden Luftfahrzeugs in Bezug auf das führende Luftfahrzeug;
- wenn eine vorhergehende Iteration mit einem Score unterhalb eines vorbestimmten Schwellenwertes detektiert wird, einen Schritt der Fortsetzung (E26), der auf einen Schritt der Initialisierung einer vorhergehenden Iteration folgt und einen Unterschritt der Extraktion (E26A) der Kontur des führenden Luftfahrzeugs umfasst;
- in allen Fällen einen Schritt der Anpassung (E28), der darin besteht, einen Algorithmus zur Neueinstellung der Konturen zu implementieren, um anhand eines Vergleichs der Kontur des führenden Luftfahrzeugs mit seinem Profil ein optimiertes Profil (14C) zu bestimmen und anhand der Abweichung zwischen den verglichenen Konturen und Profilen einen Scorewert der Iteration zu berechnen;
- wenn der Scorewert unter dem vorbestimmten Schwellenwert liegt, einen Schritt der Bestimmung (E30) der Position des nachfolgenden Luftfahrzeugs in Bezug auf das führende Luftfahrzeug anhand eines optimierten Profils und des dreidimensionalen Modells des führenden Luftfahrzeugs.

2. Verfahren nach Anspruch 1, wobei der Einstellungsschritt (E28) Folgendes umfasst:
- bei Nichtvorhandensein einer vorhergehenden Iteration: die Unterschritte des Vergleichs (E28B) der Pixel des Profils (14A) mit den Pixeln der Kontur (10) des führenden Luftfahrzeugs (AC2) und der Identifikation (E28C) der Kontrollpunkte der Kontur des führenden Luftfahrzeugs, die jeweils Kontrollpunkten des Profils (14A) entsprechen, um Paare von Kontrollpunkten (24) zu erhalten;
- bei Vorhandensein einer vorhergehenden Iteration: die Unterschritte der Bestimmung (E28A) eines neuen Profils (14B) des führenden Luftfahrzeugs (AC2) anhand des dreidimensionalen Modells (12) des führenden Luftfahrzeugs in Abhängigkeit von den Daten der vorhergehenden Iteration, des Vergleichs (E28B) der Pixel des neuen Profils (14B) mit den Pixeln der Kontur (10) des führenden Luftfahrzeugs (AC2) und der Identifikation (E28C) der Kontrollpunkte der Kontur des führenden Luftfahrzeugs, die jeweils Kontrollpunkte des neuen Profils (14B) entsprechen, um Paare von Kontrollpunkten (24) zu erhalten;
- in allen Fällen einen Unterschritt der Berechnung (E28D) eines Abstands zwischen den Kontrollpunkten jedes Paars von Kontrollpunkten (24) und des Scorewertes der Iteration, der der Summe der für alle Paare bestimmten Abstände entspricht.

3. Verfahren nach Anspruch 2, wobei der Unterschritt der Identifikation (E28C) der Kontrollpunkte der Kontur (10) des führenden Luftfahrzeugs (AC2) auf Messungen lokaler Gradienten basiert.

4. Verfahren nach einem der Ansprüche 1 bis 3, umfassend einen Schritt der Übermittlung (E4) der bestimmten Position des nachfolgenden Luftfahrzeugs (AC1) in Bezug auf das führende Luftfahrzeug (AC2) an zumindest ein Benutzergerät (25).

5. Verfahren nach einem der Ansprüche 1 bis 4, wobei das dreidimensionale Modell (12) des führenden Luftfahrzeugs (AC2) vor dem Flug des nachfolgenden Luftfahrzeugs (AC1) bestimmt wird.

6. Verfahren nach einem der Ansprüche 1 bis 4, wobei das dreidimensionale Modell (12) des führenden Luftfahrzeugs (AC2) im Unterschritt der Detektion (E24A) anhand einer Analyse der aerodynamischen Eigenschaften des führenden Luftfahrzeugs (AC2) bestimmt wird.

7. Verfahren nach einem der Ansprüche 1 bis 6, wobei das dreidimensionale Modell (12) des führenden Luftfahrzeugs (AC2) Verformungen des führenden Luftfahrzeugs (AC2) während des Flugs berücksichtigt.

## Claims

1. Method for determining the positioning of a following aircraft (AC1) with respect to a leading aircraft (AC2) flying in front of the following aircraft, the method being implemented by the following aircraft, and comprising the following steps implemented iteratively:
- a step of acquisition (E1) of an image, in which the leading aircraft is visible;
- a step of checking (E22) for the presence or the absence of a preceding iteration, and for the value of a parameter, called score, matched with each preceding iteration;
- if an absence of preceding iteration or a preceding iteration matched with a score above a predetermined threshold is detected, an initialization step (E24) comprising:
a) a substep of detection (E24A) of the leading aircraft on the image,
b) a substep of extraction (E24B) of the outline (10) of said detected aircraft and
c) a substep of determination (E24C) of a profile (14A) of the leading aircraft from a three-dimensional model (12) of the leading aircraft stored in a database and of an initial position of the following aircraft with respect to the leading aircraft;
- if a preceding iteration matched with a score below a predetermined threshold is detected, a continuation step (E26), following an initialization step of a preceding iteration, and comprising a substep of extraction (E26A) of the outline of the leading aircraft;
- in all cases, an adjustment step (E28) consisting in implementing an outline registration algorithm, to determine an optimized profile (14C) from a comparison of the outline of the leading aircraft with its profile and in calculating a value of the score of the iteration from the deviation between said compared outline and profiles;
- if the value of the score is below the predetermined threshold, a step of determination (E30) of the positioning of the following aircraft with respect to the leading aircraft, from the optimized profile and from the three-dimensional model of the leading aircraft.

2. Method according to Claim 1, in which the adjustment step (E28) comprises:
- in the absence of a preceding iteration, the substeps of comparison (E28B) of the pixels of the profile (14A) with the pixels of the outline (10) of the leading aircraft (AC2) and of identification (E28C) of the control points of the outline of the leading aircraft which correspond, respectively, to control points of the profile (14A) so as to obtain pairs of control points (24) ;
- in the presence of a preceding iteration, the substeps of determination (E28A) of a new profile (14B) of the leading aircraft (AC2) from the three-dimensional model (12) of the leading aircraft as a function of the data from the preceding iteration, of comparison (E28B) of the pixels of the new profile (14B) with the pixels of the outline (10) of the leading aircraft (AC2) and of identification (E28C) of the control points of the outline of the leading aircraft which correspond, respectively, to control points of the new profile (14B), so as to obtain pairs of control points (24);
- in all cases, a substep of calculation (E28D) of a distance between the control points of each pair of control points (24) and of the value of the score of the iteration corresponding to the sum of the distances determined for the set of pairs.

3. Method according to Claim 2, in which the substep of identification (E28C) of the control points of the outline (10) of the leading aircraft (AC2) is based on measurements of local gradients.

4. Method according to any one of Claims 1 to 3, comprising a step of transmission (E4) of the determined positioning of the following aircraft (AC1) with respect to the leading aircraft (AC2) to at least one user device (25) .

5. Method according to any one of Claims 1 to 4, in which the three-dimensional model (12) of the leading aircraft (AC2) is determined prior to the flight of the following aircraft (AC1).

6. Method according to any one of Claims 1 to 4, in which the three-dimensional model (12) of the leading aircraft (AC2) is determined during the detection substep (E24A), from an analysis of the aerodynamic characteristics of the leading aircraft (AC2).

7. Method according to any one of Claims 1 to 6, in which the three-dimensional model (12) of the leading aircraft (AC2) takes account of the deformations of said leading aircraft (AC2) in flight.
